Europäisches Patentamt

European Patent Office

Office européen des brevets

(19)

(11) **EP 1 351 185 A2**

(12) **EUROPEAN PATENT APPLICATION**

(43) Date of publication:
08.10.2003 Bulletin 2003/41

(51) Int Cl.$^7$: **G06K 15/02**

(21) Application number: **03007238.3**

(22) Date of filing: **31.03.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **01.04.2002 JP 2002099210**

(71) Applicant: **SEIKO EPSON CORPORATION
Tokyo 160-0811 (JP)**

(72) Inventor: **Minowa, Masahiro,
Seiko Epson Corporation
Suwa-shi, Nagano-ken 392-8502 (JP)**

(74) Representative: **Hoffmann, Eckart, Dipl.-Ing.
Patentanwalt,
Bahnhofstrasse 103
82166 Gräfelfing (DE)**

(54) **Printer and method of controlling it for multichrome printing based on monochrome data**

(57) A printer (10) has a reception unit (28) for receiving print commands from a host (12), and print heads (64, 66) capable of printing multiple colors. A data processing part (24) applies a specific colorization process according to a print command received by the reception unit (28) and generates multichrome print data for printing multiple colors. The content of the colorization process is determined by colorization information stored in a colorization information storage unit (62). The colorization information is set by a data configuration unit (26) according to a color setup command from the host (12).

Fig.1

EP 1 351 185 A2

## EP 1 351 185 A2

**Description**

The present invention relates to a printer, a method of controlling it and a POS system using it.

POS systems used at store check-out registers have a printer for printing receipts. These POS printers print sale information including the name and price of each purchased product line by line on roll paper or other printing medium, and the printed paper is then cut off and issued as a receipt. The customer receiving this receipt may later transfer product name and price information from the receipt to a home budget ledger, for example, to keep the ledger as a personal record of past purchases. Most such receipts are printed in a single color, often making the printed content difficult to read. Errors can thus easily occur when transferring information from the receipt to the ledger.

In the last few years color inkjet and thermal transfer printers for use with personal computers have become widely available. Color printers capable of printing two or more colors for use with POS systems are also becoming more common. Using these printers to print receipts in color can make the receipts easier to read and is thus desirable for improved customer service.

Many application programs used in POS systems, however, were written assuming that a conventional monochrome printer would be used. This means that if the color printing capabilities of a color printer are to be utilized, the application program must be modified in order to issue multichrome print data for the printer. Changing this type of application program is typically costly, and the financial burden on the POS user, that is, the store, is thus great. It is therefore desirable to be able to print receipts in color while continuing to use existing application programs that presume use of a monochrome printer.

The present invention is directed to solving these problems, and an object of the invention is to provide a printer and a method of controlling it that allow printing in multiple colors based on a print command for monochrome printing. Another object of the invention to provide a POS system using such printer.

This object is achieved by a printer as claimed in claim 1, a method as claimed in claim 11 and a POS system as claimed in claim 10. Preferred embodiments of the invention are subject-matter of the dependent claims.

In accordance with the present invention a colorization process is applied to a print command for monochrome printing to generate multichrome print data, and the multichrome print data is then printed by the printer utilizing the printer's color capabilities.

A printer according to the present invention determines if a received print command is a text print command for styled text or a text print command for plain text, and applies the colorization process to character data for a specific command based on the result of that determination. By applying the colorization process and generating the multichrome print data after determining if a specific character style is specified in the print command, plain text and styled text can be distinguished from one another and printed in different colors based on specific text style commands.

Preferably, a printer according to the present invention has storage means for storing colorization information specifying the details of the colorization process, such as the particular color to be applied to plain text, the color to be applied to certain text styles, etc.. The printer then executes the colorization process according to the stored colorization information. In this context, the printer could further comprise setup means allowing the colorization information to be entered and stored in response to a specific colorization setup command applied to the printer, e.g., by the host of a POS system.

Examples of text styles that could be expressed by one or more colors different from that used for plain text include bold text, double-strike text ("double-strike", also known as "two-pass printing" refers to text printed twice during two successive passes of the print head), and others. Depending on the colorization information, it would be possible, for instance, to convert, whenever character data is designated to be printed in any of these text styles, the character data to those of the specified color, thereby converting monochrome text data to multichrome text data.

Further objects and advantages of the present invention will be better understood from the following detailed description of a preferred embodiment with reference to the accompanying drawings, in which:

Fig. 1    is an overview of a POS system according to a preferred embodiment of the invention;

Fig. 2    shows an example of the colorization information;

Fig. 3    shows a sample printout of a receipt obtainable by this embodiment of the invention;

Fig. 4    is a flow chart showing a process run by a data processing part when the colorization function is enabled;

Fig. 5    is a flow chart showing a colorization process that includes recognizing normal characters and styled characters in the text;

Fig. 6    is a flow chart showing a colorization process for normal characters in the text; and

Fig. 7     shows an example of a configuration window for setting the colorization information on the host.

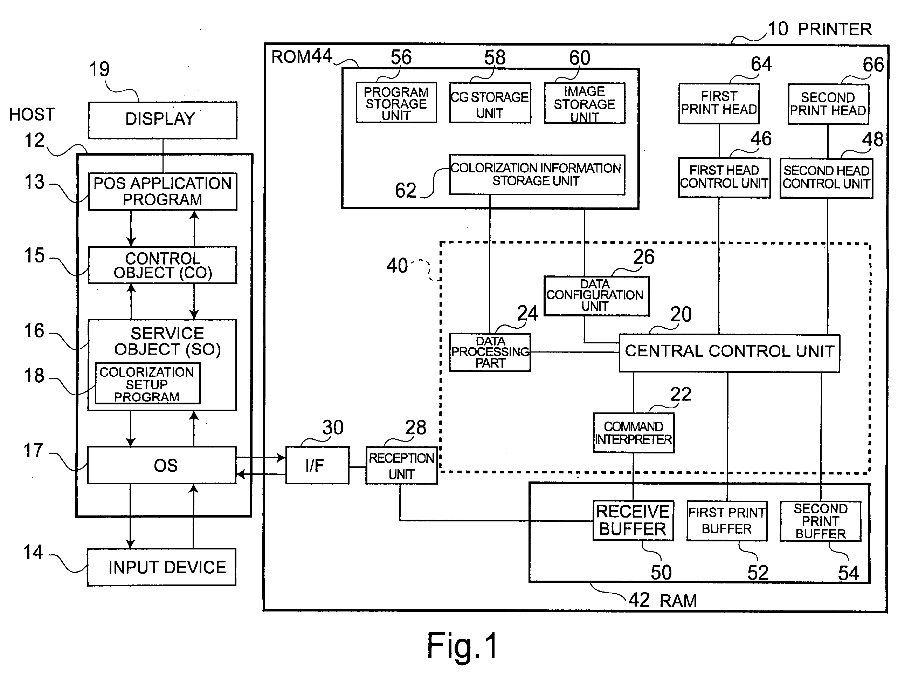

Fig. 1 is a block diagram of a POS system according to a preferred embodiment of the present invention. As shown in the figure the POS system has a printer 10 and host 12.

In this first embodiment, particular reference will be made to an inkjet printer as one example of a printer capable of printing two colors, a first (main) color, e.g. black, and a second color (subcolor), e.g., red or blue. The printer 10 is used to print receipts as controlled by the host 12. As further described below, the printer 10 is not limited to a two-color printer and could be a printer capable of printing three or more colors. The printer 10 is also not limited to an inkjet printer, and could be a thermal transfer printer or any other type of printer capable of printing in two or more colors. Moreover, no particular color is critical for the present invention.

The host 12 is a computer system that controls the printer 10 by means of a printer driver, for example, a so-called OPOS (OLE for Retail POS) or JavaPOS® (Java for Retail POS) that runs under an OS (Operating System) such as Windows® . Drivers function as a device-independent interface between a POS application program 13 running under the OS and peripheral devices. To achieve this functionality, drivers typically comprise a device control object for each device category, such as printer, display device, input device etc., and a device service object for each device model. The printer driver has a printer control object 15 for the device category "printer" and a service object 16 for each printer model.

The POS application program 13 tabulates sales data for the purchased products based on corresponding product codes input by means of the input device 14, and outputs print data for printing the tabulated data as a receipt. The print data output from the POS application program 13 is passed to the printer control object 15, and is passed from the control object 15 to the service object 16 corresponding to the particular printer model. The service object 16 processes the print data for the printer to generate a print command according to the command specifications of the printer 10, and then sends the print command to the printer 10 through the OS 17. The service object 16 thus absorbs differences between different printer models, and thus enables the POS application program 13 to be written as a program that is not dependent on a particular printer model.

In the embodiment shown, a colorization setup program 18 for setting colorization information stored in the printer 10 as further described below is embedded in the service object 16. The colorization setup program 18 provides a user interface and presents a specific configuration screen on the display device 19 for setting the colorization information. The colorization setup program 18 need not be embedded in the service object, i.e., be part of the printer driver, but may be a stand-alone program instead.

The print commands sent from the host 12 to the printer 10 are commands for printing text (referred to below as "text print commands") and commands for printing images (referred to below as "image print commands"), and the printer 10 can print text and images according to these print commands. Furthermore, the print commands output by the host 12 in the present embodiment are monochrome print commands, i.e., they do not include any color information, and the printer 10 has a function for applying a colorization process to these monochrome print commands and printing with two or more colors (this is referred to as a "colorization function" below).

ESC *, ESC L, and GS /, for example, are used as image print commands. Image printing is used in this embodiment to print a store logo, for example, stored in the printer 10 on a receipt; the command "GS /" is used for this purpose. Because a specific command code is thus used for the image print command, the printer 10 can distinguish between image print commands and text print commands.

Text style commands for applying styles to letters, i.e. formatting letters, is provided for text printing. For example, ESC E can be used to specify bold, ESC G can be used to specify double-strike, and ESC - can be used to specify underlined text. When such formatted text is printed it can be distinguished from normal unformatted text, i.e., plain text, by interpreting the commands, even when the data is for monochrome printing.

As shown in Fig. 1, the printer 10 has a CPU 40 including a central control unit 20, a command interpreter 22, a data processing part 24, and a data configuration unit 26. The command interpreter 22 interprets print commands received by a reception unit 28 from the host 12 through an interface 30, and the central control unit 20 runs a process corresponding to the respective command. It should be noted that the central control unit 20, command interpreter 22, data processing part 24, and data configuration unit 26 are functional units preferably implemented by the CPU 40 running a specific control program.

Connected to the CPU 40 are RAM 42, ROM 44, a first head control unit 46, and a second head control unit 48.

A receive buffer 50, first print buffer 52, and second print buffer 54 are provided in RAM 42. Print commands received by the reception unit 28 from the host 12 are stored in the receive buffer 50. Bit data for printing the first color is stored in the first print buffer 52 and bit data for printing the second color is stored in the second print buffer 54.

Provided in ROM 44 are program storage unit 56 for storing the control program run by the CPU 40, CG storage unit 58 for storing bit pattern data for text, symbols, and other characters, and bit pattern data for a background added to the text, image storage unit 60 for storing bit image data for the store logo or other image to be printed on the receipts, and colorization information storage unit 62 for storing the colorization information described below. It should be noted that ROM 44 is composed of a rewritable ROM such as an EEPROM and a mask ROM or non-writable ROM storing firmware for controlling the CPU 40. The program storage unit 56 is part of the non-rewritable ROM, and the CG storage unit 58, the image storage unit 60, and the colorization information storage unit 62 are parts of the rewritable ROM. The CG storage unit 58, however, could be disposed in either ROM space.

A first print head 64 and a second print head 66 are respectively connected to the first head control unit 46 and the second head control unit 48. The first print head 64 and the second print head 66 are print heads for respectively printing the first color and second color. Print data stored in the first print buffer 52 is printed by the first head control unit 46 using the first color, and print data stored in the second print buffer 54 is printed by the second head control unit 48 using the second color.

The command interpreter 22 interprets print commands stored in the receive buffer 50 and determines if a print command is a text print command or an image print command. The result is passed with the print data specified by the print command to the data processing part 24. Based on the received data the data processing part 24 stores the print data in a bit pattern format in the first print buffer 52 and the second print buffer 54 as further described below.

If the colorization function noted above is not enabled, that is, if the colorization flag stored in the colorization information storage unit 62 described below is not set, the data processing part 24 reads the bit pattern data for each character to be printed from the CG storage unit 58 for character data in a text print command, and stores the read data in the first print buffer 52. For image print commands the bit image data for the image to be printed is read from the image storage unit 60 and stored in the first print buffer 52. The first print head 64 is then driven to print data stored in the first print buffer 52 in one color, i.e., the first color.

If the colorization function is enabled, the data is printed in two colors by means of the data processing part 24 running a specific colorization process according to the content of the colorization information stored in the colorization information storage unit 62. Details of this colorization process are described further below.

If a text style is applied by a style command such as an underline command or a double-strike command while executing a text print command, the content (i.e., information items as further described below) of the colorization information corresponding to that command is referenced to determine if a colorization process is specified. For example, if a colorization process is indicated in the colorization information for printing underlined text, the specified colorization process is applied to the text, symbols, and other character data for the particular command specifying the text style, bit pattern data for the specified characters in the receive buffer is generated and stored in the print buffer of the second head for printing the second color.

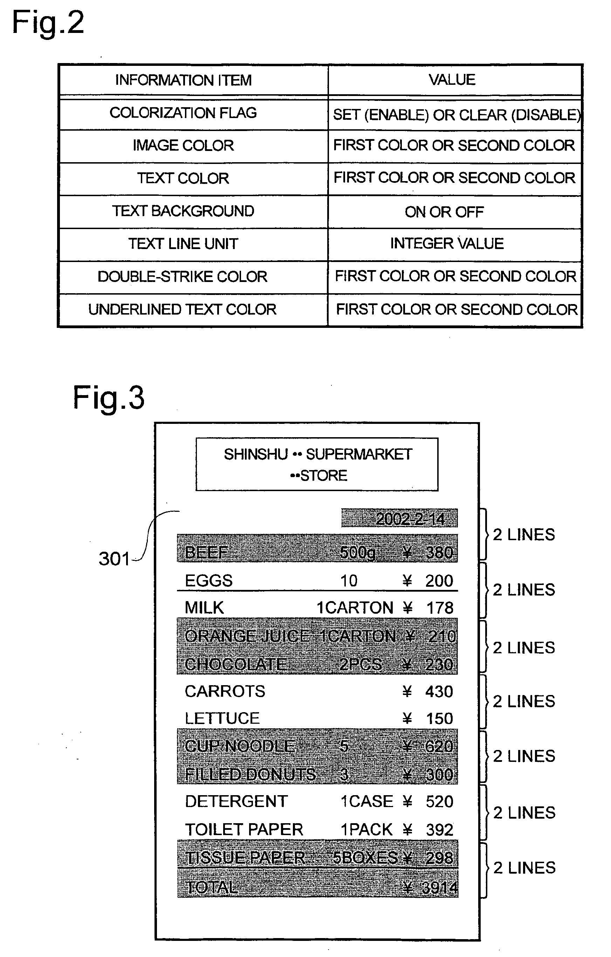

Fig. 2 shows an example of the content of the colorization information stored in the colorization information storage unit 62. As shown in the figure the colorization information contains plural information items, such as the colorization flag, image printing color, text printing color, whether there is a text background, a text line unit, the color for printing double-strike text, and the color for printing underlined text. These settings are converted to specific data, stored in the colorization information storage unit 62, and used as a lookup table.

| (1) Colorization flag | determines whether the colorization function is enabled or disabled. (If the flag is set the colorization function is enabled.) |
|---|---|
| (2) Image printing color | specifies whether to use the first or second color for printing images. |
| (3) Text printing color | specifies whether to use the first or second color for printing text. |
| (4) Text background flag | specifies whether to add a background color to text. |
| (5) Text line unit | determines the number of lines in one block to which the colorization process is applied as a unit. For example, if the line unit value is 2, a block two lines to which the colorization process is applied and a block of two lines to which the process is not applied alternate as shown in Fig. 3. |
| (6) Double-strike printing color | specifies whether to use the first or second color for printing double-strike text. |
| (7) Underlined text printing color | specifies whether to use the first or second color for printing underlined text. |

By adding additional information items, it is also possible to colorize both the underline and the text. It is also possible to specify whether only the underline should be colorized. The print result 301 shown in Fig. 3 shows an example in which an underline printed in the second color is applied. The content of the above colorization information can be set by sending a specific colorization setup command from the host 12 to the printer 10.

The format of the setup command could be as shown below, for example, including the command code and parameters:

ESC X *n1, n2, n3, n4, n5, n6, n7*

where parameters *n1* to *n7* correspond to the above information items (1) to (7) in the colorization information and are defined as follows:

*n1*: controls whether the colorization function is enabled (enable = 1; disable = 0)

*n2*: controls whether to print images with the first or the second color (second color = 1; first color = 0)

*n3*: controls whether to print text with the first or the second color (second color = 1; first color = 0)

*n4*: controls whether to print the text background with the second color (print = 1; do not print = 0)

*n5*: specifies the number of lines of a block, see item (5) above.

*n6*: controls whether to print double-strike text with the first or the second color (second color = 1; first color = 0)

*n7*: controls whether to print underlined text with the first or the second color (second color = 1; first color = 0)

It should be noted that each parameter in the above example has a 1-byte data format, but it is not necessary to assign one byte to each information item of the colorization information. Because each of the exemplary parameters *n1* to *n4, n6* and *n7* can be represented by a single bit, one byte could be used for multiple information items so as to reduce the number of parameters of the command. For example, if *n3* is set to print text with the second color, a flag for selecting whether normal text is printed or styled text is printed could also be assigned to a particular bit of *n3*. Furthermore, if printing in the second color is specified for styled text, flags for indicating whether the double-strike style is used, underlining is used, or both are used could also be assigned to specific bits in parameter *n3*. If the number of configurable items is 8 bits or less, then all of the above parameters could be included in a single byte.

When the printer 10 receives this setup command it specifies the details of the colorization information by means of the data configuration unit 26.

It should be noted that the above command code ESC X is defined by the printer manufacturer. Any code that can be distinguished from other commands and interpreted by a respective printer can therefore be used as the above-noted command code ESC X.

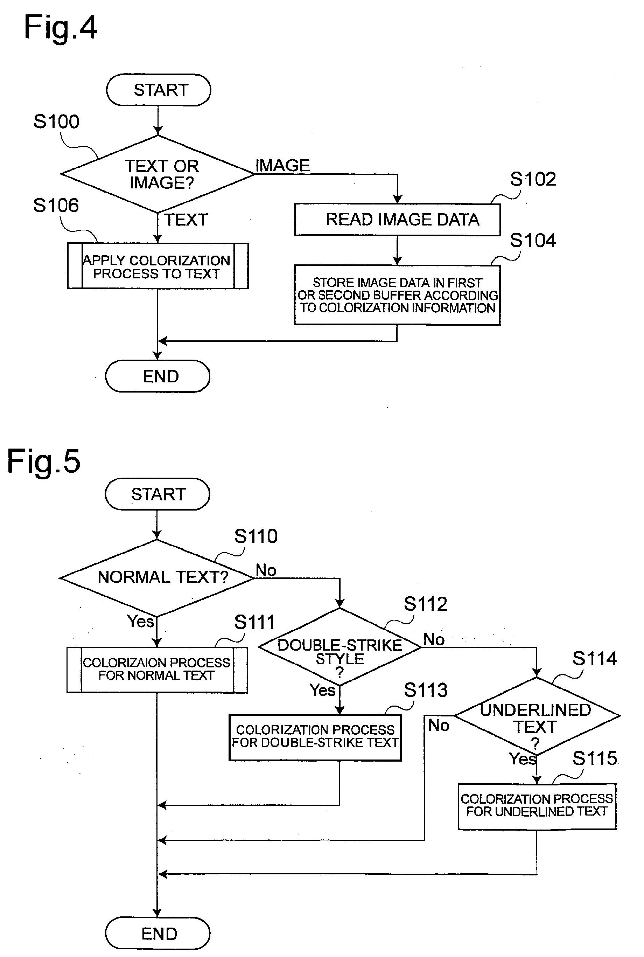

Fig. 4 is a flow chart of the process run by the data processing part 24 when the colorization function is enabled, that is, when the colorization flag is set. As shown in the figure, whether the print command is a text print command or an image print command is determined first (S100). If it is an image print command, the bit image data for the image specified in the print command is read from the image storage unit 60 (S102). The bit image data is then stored in the first print buffer 52 or second print buffer 54 according to the value of the image printing color in the colorization information (S104). More specifically, if the image printing color is set to the first color, the image data is stored in the first print buffer 52, which is assigned to the first color. But if the image printing color is set to the second color, the image data is stored in the second print buffer 54, which is used for the second color.

On the other hand, if the print command is a text print command, the colorization process is applied to the plain (normal style) text specified for printing by the print command or to text for printing in a specified style based on the colorization information (S106).

Fig. 5 is a flow chart showing the content of a text colorization process in step S106 above.

As shown in Fig. 5, the first step is to determine whether to colorize plain text or to colorize styled text (S110). If it is plain text (S110 returns *YES*), the colorization process is applied to the plain text specified by the print command for printing based on the colorization information (S111). If it is styled text (S110 returns *NO*), whether colorization of double-strike text is indicated is determined (S112). If it is (S112 returns *YES*), the colorization process is applied to the double-strike text (S113). If it is not (S112 returns *NO*), whether colorization of underlined text is indicated is determined (S114). If it is (S114 returns *YES*), the colorization process is applied to the underlined text (S115).

Double-strike text and underlined text are described in the present embodiment as examples of styled text, but other text style commands are also available, including bold, italic, and inverted text styles, and the colorization process can be likewise applied to these other styles.

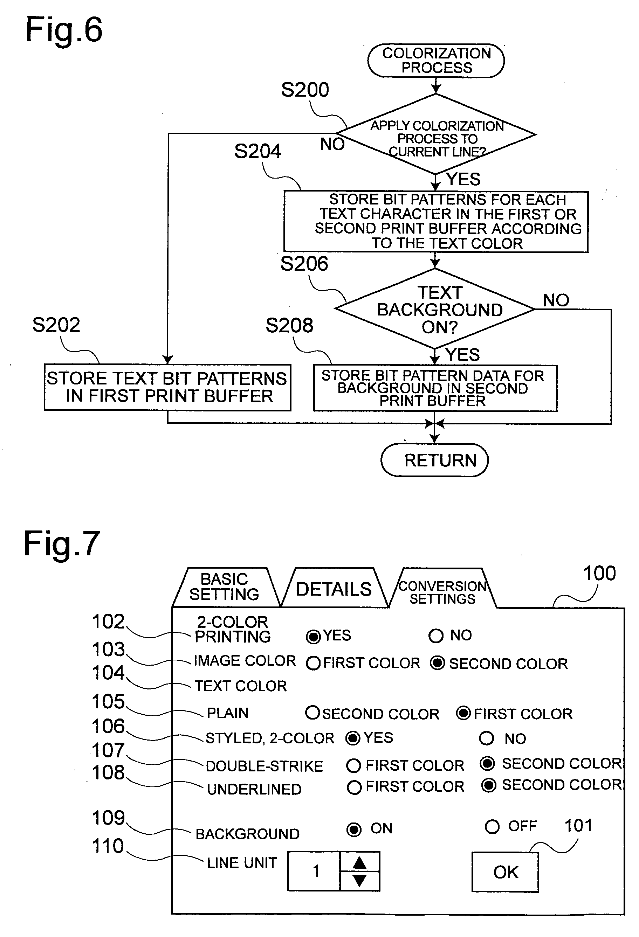

Fig. 6 is a flow chart of a colorization process for plain text executed in step S111 above.

As shown in the figure, whether the colorization process is to be applied to the current line is first determined based on the line unit value in the colorization information (S200). It should be noted that the data processing part 24 counts the carriage return codes in the text, identifies the current line by the current count value, and determines whether the colorization process is to be applied to the current line based on that count value and the line unit value. If the result of this determination is that the colorization process is not to be applied to the current line (S200 returns *NO*), bit pattern data for the text is read from CG storage unit 58, stored in the first print buffer 52, and this process ends.

However, if the colorization process is to be applied to the current line (S200 returns *YES*), bit pattern data for the text is read from CG storage unit 58 and stored in first print buffer 52 or the second print buffer 54 according to the text printing color in the colorization information (S204). More specifically, if the color for printing text is the first color, the data is stored in the first print buffer 52, but if it is the second color, the data is stored in the second print buffer 54. Whether the text background flag in the colorization information is set is then determined (S206); if not (S206 returns *NO*), the process ends. If it is (S206 returns *YES*), the bit pattern data for the background pattern is read from the CG storage unit 58 and stored in the second print buffer 54 (S208), and the process then ends.

The data processing part 24 thus stores print data in the first print buffer 52 or the second print buffer 54 according to the colorization information for both text print commands and image print commands. As described above, data is thus printed in the first color and the second color according to the print data stored in the first print buffer 52 and second print buffer 54, respectively. The above-described process applied by the data processing part 24 therefore enables printing a two-color receipt such as shown in the example in Fig. 3 according to the content of the colorization information based on a monochrome print command.

It should be noted that the print data stored in the first print buffer 52 and the second print buffer 54 in steps S104, S202, and S208 in this embodiment corresponds to the multichrome print data as this term is used in the claims.

Setting the colorization information in the host 12 in this embodiment is described next. The colorization information can be set by running a colorization setup program 18 on the host 12. When the colorization setup program 18 is started up a settings window 100 such as shown in Fig. 7 is presented on the display device 19 of the host 12.

As shown in the figure this settings window 100 has a field 102 for selecting two-color printing (i.e., turning the colorization function on or off), a field 103 for setting the image printing color, a field 104 for setting the text printing color, a plain text color field 105 for setting how text color is applied to plain text in the colorization process, a styled text color field 106 for likewise setting how text color is applied in the colorization process to styled text, a field 107 for setting whether the text style is double-strike, a field 108 for setting underlined text, a field 109 for setting a text background, a field 110 for setting the number of lines in each line unit, and an OK button 101. When the colorization setup program 18 starts up a command is sent to the printer 10 to read the currently stored colorization information, and the details of the colorization information returned from the printer 10 in response to this command are initially displayed in the corresponding fields in the settings window 100.

When the OK button 101 in the settings window 100 is clicked a print command that is the colorization setup command is generated and sent to the printer 10 with the parameters of the command being based on the content of each field.

For example, if two-color printing is on, the image printing color is set to the second color, the text printing color is set to the first color, the text background is on, and the line unit count is 2, the setup command ESC X 11012nm is sent. The data configuration unit 26 of the printer 10 then sets the colorization information based on this setup command. Parameters n, m are parameters for setting text styles, specific values are defined, and a colorization process is applied accordingly to the specific styled text. With the example shown in Fig. 2, for example, the colorization process can be specified for two types of text styles, double-strike and underline, in which case parameters can be separately assigned to each style. If it is desirable to increase the number of text styles, compatibility with the bold style noted above and numerous other styles can be maintained by assigning the styles to particular parameter bits.

When a monochrome print command is sent from the host 12 to the printer 10 in this embodiment of the invention the colorization function of the printer 10 applies a colorization process according to the colorization information to add a second color and print in two colors. As a result, even if the POS application program 13 run by the host 12 is only compatible with a monochrome printer, printer 10 can be used to print in multiple colors without making any changes to the program. In the embodiment shown and described, the colorization setup program is integrated into the service object 16. In this case, a printer driver on the host 12 for use with a monochrome printer would have to be replaced by the described one including the colorization setup program. It is also possible, however, to provide the colorization setup program as a separate piece of software, in which case not even the printer driver on the host 12 side would have to be changed. In any case it is possible with this embodiment of the present invention to issue easy-to-read receipts printed in multiple colors without financially burdening the POS system user, i.e., the store. More specifically, this printer 10 can be installed in a store without changing the existing POS system program, the work and cost involved in updating the system can be reduced, and the usage value can be improved for the store.

This embodiment of the invention can also distinguish between image print commands and text print commands, and can define the details of the colorization process separately for text and images. A store logo, for example, can therefore be printed in the color preferred by the store while still allowing to issue easy-to-read receipts in multiple colors. Therefore, if the store has a specific corporate color that color can be used to print a store logo, for example, and impress upon the customer a positive association between that color and the store.

Furthermore, because the colorization information stored in the printer 10 is set according to a colorization setup command sent from the host 12, the details of the colorization process can be defined on the host 12 side by the user without directly operating the printer 10. In addition, because the colorization information can be set by simply activating the colorization setup program 18 and entering the desired values and settings into a settings window 100 such as shown in Fig. 7, an easy-to-use interface can be provided for the user. Yet further, because the details of the current colorization information is presented automatically as the default values in the settings window 100 when the colorization setup program 18 is activated, the user can readily know what the current settings are.

In a two-color inkjet printer used as an example of printer 10, the frequency of printing in the second color is low and ink of the second color is therefore not consumed as quickly as ink of the first color. Ink of the second color is therefore left unused in the printer 10 for a long time, inviting an increase in ink viscosity and change in the ink composition that can become a cause of trouble such as ink clogging the print head. This embodiment of the invention addresses this problem by adding the second color and printing with two colors in response to monochrome print commands sent from the host 12. The ink of the second color is therefore used with approximately the same frequency as that of the first color, and print head clogging and other such problems can therefore be prevented.

It will also be noted that while the colorization information in this embodiment is described as specifying the details of the colorization process using information items such as the image printing color, text printing color, text background on/off flag, and the line unit for text to be colored, these information items (and the corresponding fields in Fig. 7) are used by way of example only. For example, instead of applying the colorization process in block units as in this embodiment, a single print color could be specified for all text. Furthermore, a number of patterns, such as halftone, diagonal slashes, and solid fill, can also be stored in the printer 10 so that a desired pattern can be selected.

The printer 10 is not limited to printing two colors, a first color and second color, and could be designed to print a mixed color by simultaneously printing the first and the second color. In this case each of the printing colors defined in the colorization information could be selected from among three colors: the first color, the second color, and a mixture thereof. In this case, data for which the mixed color is selected would be stored in both the first print buffer 52 and the second print buffer 54 of the printer 10 and the same pattern would be printed by the first print head 64 and the second print head 66 to print the color blend. If the printer 10 has a print head and a function for printing three or more colors, the image and text printing colors can be similarly selected from any of the colors printable by the printer 10. If the monochrome print data is to be changed to multichrome print data with more than two colors (or three colors of which one is the mixture of the other two), the described embodiment may be easily adapted. For each additional color an additional print buffer, head control unit and print head could be provided. The processing would then store the respective bit pattern data or image pattern data in any one or more of such three or more print buffers and corresponding colors would be printed by means of the head control units and print heads.

Various printing features can thus be used as the colorization information. What is important is that the present invention makes it possible to use the colorization information to specify how to print in multiple colors, and the colorization setup command has a format that allows to specify the content of each information item of the colorization information.

It should also be noted that this embodiment of the invention is described as being applied to printing receipts in a POS system. This only one example, however, and the invention can be widely applied to printing multiple colors based on a monochrome print command by means of a printer capable of printing multiple colors.

In a preferred embodiment of a printer according to the present invention two colors, such as black as the first (main) color and a color other than black as a second color, are described as the printing colors. Of course, no particular color is critical for the present invention.

A receipt printer configured as described above could, for example, improve the visual impact by printing receipts on sale days using a color different than normally used, thereby enhancing the effect of advertising to customers.

**Claims**

1. A printer comprising:

   reception means (28) for receiving external print commands intended for monochrome printing,
   printing means (64, 66) capable of printing in multiple colors,
   command interpreting means (20, 22) for interpreting print commands received by the reception means (28),
   print data processing means (20, 24) for applying a colorization process to monochrome character data corresponding to a specific print command and generating multichrome print data, and
   control means (46, 48) for controlling the printing means (64, 66) based on the multichrome print data so as to print in multiple colors,

   wherein the command interpreting means (20, 22) is adapted to determine if a received print command is a text print command for styled text or a text print command for plain text, and
   the print data processing means (20, 24) is responsive to said command interpreting means (20, 22) for applying said colorization process depending on whether a received print command is a text print command for styled text or a text print command for plain text.

2. The printer of claim 1, **characterized by** being capable of printing two colors, a first color and a different second color, and the print data processing means (20, 24) being configured to enable two-color printing by running a process for normally printing with the first color and printing character data corresponding to a specific print command with the second color.

3. The printer of claim 1 or 2, **characterized by** the print data processing means (20, 24) applying the colorization process to character data corresponding to a specific text style command.

4. The printer of claim 3, **characterized by** said specific text style command being one or more of an underline command, a bold command and a double-strike command.

5. The printer of any one of the preceding claims, **characterized by** said colorization process being a process for changing the print color of the monochrome character data designated by a print command.

6. The printer of any one of the preceding claims, **characterized by** comprising storage means (62) for storing colorization information specifying details of said colorization process,
    the print data processing means (20, 24) running the colorization process according to the colorization information.

7. The printer of claim 6, **characterized by** further comprising configuration means (26) for setting the colorization information according to a colorization setup command received by the reception means (28).

8. The printer of claim 7, **characterized by** the details of said colorization process being specified separately by the colorization setup command for text and images, and
    the configuration means (26) setting the colorization information separately for text and images based on the colorization setup command.

9. The printer of claim 6, 7 or 8, further comprising means responsive to a particular command received by said reception means (28) for reading said stored colorization information and outputting the read information as a response to said particular command.

10. A POS system comprising:

    a printer (10) according to any one of claims 1 to 9, and
    a host device (12) connected to the printer (10) and including

    - input means (14) allowing input of product information related to a sales transaction,
    - a POS application execution unit (13, 15, 16, 17) for tabulating sales information based on product information input via the input means (14) and for outputting data for receipt printing, and
    - means (17) for sending a print command to the printer (10), the print command being generated based on the receipt printing data output from the POS application execution unit.

11. A method of controlling a printer (10) as defined in any one of claims 1 to 9, comprising the steps of:

    a) interpreting print commands received by reception means (28),
    b) determining if the print command contains a specific text style command,
    c) applying a specific colorization process to character data corresponding to the specific text style command, thereby generating multichrome print data for printing in multiple colors, and
    d) controlling the printing means (64, 66) based on the generated multichrome print data to print in multiple colors.

12. The method of claim 11, further comprising:

    e) setting colorization information for specifying details said colorization process,

    wherein step c) comprises applying the colorization process according to the colorization information set in step e).

13. A recording medium readable by a machine, the medium carrying a program of instructions executable by the machine to perform a method according to claim 11 or 12.

Fig.1

# Fig.2

| INFORMATION ITEM | VALUE |
|---|---|
| COLORIZATION FLAG | SET (ENABLE) OR CLEAR (DISABLE) |
| IMAGE COLOR | FIRST COLOR OR SECOND COLOR |
| TEXT COLOR | FIRST COLOR OR SECOND COLOR |
| TEXT BACKGROUND | ON OR OFF |
| TEXT LINE UNIT | INTEGER VALUE |
| DOUBLE-STRIKE COLOR | FIRST COLOR OR SECOND COLOR |
| UNDERLINED TEXT COLOR | FIRST COLOR OR SECOND COLOR |

# Fig.3

301

```
          SHINSHU ·· SUPERMARKET
                 ··STORE

                          2002-2-14          } 2 LINES
    BEEF              500g    ¥  380

    EGGS              10      ¥  200          } 2 LINES
    MILK           1CARTON    ¥  178

    ORANGE JUICE  1CARTON  ¥  210             } 2 LINES
    CHOCOLATE        2PCS      ¥  230

    CARROTS                   ¥  430          } 2 LINES
    LETTUCE                   ¥  150

    CUP NOODLE       5         ¥  620         } 2 LINES
    FILLED DONUTS    3         ¥  300

    DETERGENT       1CASE  ¥  520             } 2 LINES
    TOILET PAPER    1PACK  ¥  392

    TISSUE PAPER   5BOXES ¥  298              } 2 LINES
    TOTAL                     ¥  3914
```

# Fig.4

```
                    ┌─────────┐
                    │  START  │
                    └────┬────┘
                         │
S100                     ▼
              ╱──────────────────╲        IMAGE
             ╱    TEXT OR          ╲──────────────────────┐
             ╲    IMAGE?           ╱                       │
              ╲──────────────────╱                         │              S102
S106              │ TEXT                                    ▼
                  │                              ┌──────────────────────┐
                  ▼                              │   READ IMAGE DATA     │
        ┌──────────────────┐                     └──────────┬───────────┘
        │ APPLY COLORIZATION│                               │          S104
        │ PROCESS TO TEXT   │                               ▼
        └────────┬─────────┘              ┌──────────────────────────────────┐
                 │                         │  STORE IMAGE DATA IN FIRST        │
                 │                         │  OR SECOND BUFFER ACCORDING       │
                 │                         │  TO COLORIZATION INFORMATION      │
                 │◄────────────────────────┴──────────────────────────────────┘
                 ▼
            ┌─────────┐
            │   END   │
            └─────────┘
```

# Fig.5

```
                    ┌─────────┐
                    │  START  │
                    └────┬────┘
                         │             S110
                         ▼
              ╱──────────────────╲        No
             ╱   NORMAL TEXT?     ╲──────────────────┐
             ╲                    ╱                   │
              ╲──────────────────╱                    ▼              S112
                  │ Yes              S111    ╱──────────────────╲       No
                  │                         ╱   DOUBLE-STRIKE    ╲──────────────────┐
                  ▼                         ╲    STYLE           ╱                   │
        ┌──────────────────┐                ╲     ?            ╱                    │          S114
        │ COLORIZAION PROCESS│                ╲──────────────╱                      ▼
        │ FOR NORMAL TEXT    │                   │ Yes      S113          ╱──────────────────╲
        └────────┬─────────┘                     │                       ╱   UNDERLINED       ╲   No
                 │                                ▼                       ╲    TEXT            ╱───┐
                 │                  ┌──────────────────────────┐          ╲     ?            ╱    │
                 │                  │ COLORIZATION PROCESS      │           ╲──────────────╱      │
                 │                  │ FOR DOUBLE-STRIKE TEXT    │              │ Yes    S115      │
                 │                  └──────────┬───────────────┘              │                  │
                 │◄────────────────────────────┘                             ▼                  │
                 │                                              ┌──────────────────────┐         │
                 │                                              │ COLORIZATION PROCESS  │         │
                 │◄─────────────────────────────────────────────│ FOR UNDERLINED TEXT   │        │
                 │                                              └──────────────────────┘         │
                 │◄──────────────────────────────────────────────────────────────────────────────┘
                 ▼
            ┌─────────┐
            │   END   │
            └─────────┘
```

# Fig.6

```
                              ┌─────────────────┐
                              │  COLORIZATION   │
                              │    PROCESS      │
                              └─────────────────┘
                                       │
          S200                         ▼
                            ╱─────────────────────╲
                           ╱  APPLY COLORIZATION   ╲
                    NO    ╱      PROCESS TO          ╲
        ┌────────────────〈     CURRENT LINE?        〉
        │    S204         ╲                         ╱
        │                  ╲───────────────────────╱
        │                             │ YES
        │                             ▼
        │             ┌─────────────────────────────────┐
        │             │  STORE BIT PATTERNS FOR EACH     │
        │             │  TEXT CHARACTER IN THE FIRST OR  │
        │             │  SECOND PRINT BUFFER ACCORDING   │
        │             │        TO THE TEXT COLOR         │
        │             └─────────────────────────────────┘
        │    S206                     │
        │                             ▼
        │                    ╱─────────────╲
        │                   ╱     TEXT       ╲    NO
        │                  ╱   BACKGROUND      ╲──────────┐
   S202 │        S208     〈      ON?          〉         │
        │                  ╲                   ╱          │
        │                   ╲─────────────────╱           │
        │                          │ YES                  │
        ▼                          ▼                       │
┌──────────────────────┐  ┌─────────────────────────┐    │
│ STORE TEXT BIT        │  │ STORE BIT PATTERN DATA  │    │
│ PATTERNS IN FIRST     │  │ FOR BACKGROUND IN       │    │
│ PRINT BUFFER          │  │ SECOND PRINT BUFFER     │    │
└──────────────────────┘  └─────────────────────────┘    │
        │                          │                       │
        └──────────────────────────┴───────────────────────┘
                                   │
                                   ▼
                          ┌─────────────┐
                          │   RETURN    │
                          └─────────────┘
```

# Fig.7

```
┌──────────┬──────────┬────────────┐                    100
│  BASIC   │ DETAILS  │ CONVERSION │
│ SETTING  │          │  SETTINGS  │
┌──────────┴──────────┴────────────┴──────────────────────┐
│                                                          │
│ 102  2-COLOR                                             │
│      PRINTING      ◉ YES            ○ NO                 │
│ 103                                                      │
│      IMAGE COLOR   ○ FIRST COLOR   ◉ SECOND COLOR        │
│ 104                                                      │
│      TEXT COLOR                                          │
│ 105                                                      │
│      PLAIN         ○ SECOND COLOR  ◉ FIRST COLOR         │
│ 106                                                      │
│      STYLED, 2-COLOR  ◉ YES          ○ NO               │
│ 107                                                      │
│      DOUBLE-STRIKE ○ FIRST COLOR   ◉ SECOND COLOR        │
│ 108                                                      │
│      UNDERLINED    ○ FIRST COLOR   ◉ SECOND COLOR        │
│                                                          │
│ 109                                                      │
│      BACKGROUND    ◉ ON            ○ OFF      101        │
│ 110                  ┌───┬───┐           ┌──────┐        │
│      LINE UNIT       │ 1 │ ▲ │           │  OK  │        │
│                      │   │ ▼ │           └──────┘        │
│                      └───┴───┘                           │
└──────────────────────────────────────────────────────────┘
```